# EUROPEAN PATENT APPLICATION

(11) **EP 4 589 421 A1**
(43) Date of publication of application: **23.07.2025**
(21) Application number: 25151868.4
(22) Date of filing: 14.01.2025
(51) Int. Cl.: G06F 8/33, G06N 20/00

(54) **IMPROVED CODE GENERATION USING TREE STRUCTURE FOR TRAINING AND TRIMMING OF GENERATIVE MODEL OUTPUT**

(30) Priority: 16.01.2024 US 202418413799
(71) Applicant: Google LLC, Mountain View, CA 94043 (US)
(72) Inventor: BANSAL, Kshitij, San Mateo, CA (US); SHEN, Jingyue, Santa Clara, CA (US)
(74) Representative: Kennedy, Richard E.

(57) **Abstract**

A method implemented using one or more processors comprises selecting a starting location in an original code snippet, processing the original code snippet to generate a tree representation of the original code snippet, identifying a subtree of the tree representation that contains the starting location in the original code snippet, identifying a ground truth portion of the original code snippet that corresponds to at least a portion of the subtree of the tree representation, and training a machine learning model to generate a predicted code snippet that corresponds to the portion of the subtree. The training includes processing a remainder of the original code snippet outside of the ground truth portion using the machine learning model.

## Description

### Background

Generative machine learning models such as large language models (LLMs) may be trained using a variety of techniques to perform a variety of tasks. One non-limited task that may be performed using LLMs is predictively completing text. For example, prefix and suffix portions of text may be provided, and the LLM may be applied to these texts to generate (or "infill") a middle portion between the prefix and suffix portions.

Efforts to implement LLM-based infilling have raised various challenges. LLM output sometimes lacks definitive end points, such as end tokens to explicitly delineate the end of LLM output. This may be caused by various factors. Some factors include limits on how many tokens can be processed using an LLM during a single iteration (*e.g*., context length), computational limits, imposed latency constraints, *etc.* Consequently, LLM output sometimes is cut off at nonsensical, illogical, or otherwise unnatural points (*e.g*., midsentence, in the middle of a source code statement, *etc.).* For example, at a possible ending point, the probability of emitting an "end token" (*e.g*., "<EOM>") might be lower than a possible continuation token. Additionally, various sampling strategies may cause the end token to be missing. In addition, without definitive end tokens, LLMs sometimes generate LLM output that is repetitive. For example, new blocks of content of the same type are sometimes generated as an attempt by the LLM to connect the LLM output to the suffix used to generate it.

### Summary

Implementations are described herein for training and/or evaluating output generated by LLMs to mitigate one or more of the aforementioned challenges associated with using LLMs to predict text. More particularly, but not exclusively, techniques are described herein for leveraging the structured nature of code, such as source code or markup language, to: (i) impose distributions on LLMs that reduce the occurrence of the aforementioned errors by increasing the likelihood of sensible and/or logical end tokens; and (ii) trim LLM output to address errors that remain.

In some implementations, a method may be implemented by one or more processors and may include: selecting a starting location in an original code snippet; processing the original code snippet to generate a tree representation of the original code snippet; identifying a subtree of the tree representation that contains the starting location in the original code snippet; identifying a ground truth portion of the original code snippet that corresponds to at least a portion of the subtree of the tree representation; and training a machine learning model to generate a predicted code snippet that corresponds to the portion of the subtree, wherein the training includes processing a remainder of the original code snippet outside of the ground truth portion using the machine learning model.

In various implementations, the method may include generating a training example that rearranges the ground truth portion of the original code snippet relative to the remainder of the original code snippet outside of the ground truth portion. In various implementations, the machine learning model may take the form of an LLM. In various implementations, training the machine learning model may include: generating an input prompt for the LLM that includes the training example; and processing the input prompt using the LLM.

In various implementations, the remainder of the original code snippet may include a prefix portion of the original code snippet that precedes the ground truth portion. In various implementations, the remainder of the original code snippet may additionally or alternatively include a suffix portion of the original code snippet that follows the ground truth portion.

In various implementations, training the machine learning model may include: comparing the predicted code snippet to the ground truth portion of the original code snippet; and training the machine learning model based on the comparing. In various implementations, the tree representation may take the form of an abstract syntax tree AST.

In various implementations, subtree may include a first leaf that contains the starting location. In various implementations, the subtree may further include a second leaf that is a sibling of the first leaf. In various implementations, the subtree may further include one or more additional leaves that are ancestor(s) of the first leaf and/or sibling(s) of an ancestor of the first leaf.

In various implementations, the original code snippet may be a source code snippet, *e.g*., writing in a programming language. In various implementations, the original code snippet may be a markup language snippet.

In a related aspect, a method may be implemented using one or more processors and may include: processing a code snippet using an LLM to generate one or more probability distributions over a defined population of tokens; based on the one or more probability distributions, formulating LLM output that includes a sequence of tokens selected from the defined population, wherein the selected sequence of tokens is indicative of a predicted code snippet; examining the one or more probability distributions generated based on the processing to determine alternative probabilities that at least some token positions of the LLM output could have been filled with end tokens instead, wherein an end token signals a logical end of the LLM output; based on the alternative probabilities, selecting a given token of the LLM output as a final token; trimming the LLM output that follows the final token to generate trimmed LLM output; and causing a portion of the predicted code snippet that corresponds to the trimmed LLM output to be rendered on a display. In various implementations, the code snippet may be received as input in an integrated development environment (IDE), and the portion of the predicted code snippet may be rendered in the IDE as a proposed autocompletion. In various implementations, the method may include generating an end token to immediately follow the final token.

In addition, some implementations include one or more processors of one or more computing devices, where the one or more processors are operable to execute instructions stored in associated memory, and where the instructions are configured to cause performance of any of the aforementioned methods. Some implementations also include one or more non-transitory computer readable storage media storing computer instructions executable by one or more processors to perform any of the aforementioned methods.

It should be appreciated that all combinations of the foregoing concepts and additional concepts described in greater detail herein are contemplated as being part of the subject matter disclosed herein. For example, all combinations of claimed subject matter appearing at the end of this disclosure are contemplated as being part of the subject matter disclosed herein.

### Brief Description of the Drawings

Fig. 1 schematically depicts an example environment in which selected aspects of the present disclosure may be implemented, in accordance with various implementations.
Fig. 2 schematically depicts an example of how various components depicted in Fig. 1 may cooperate to carry out selected aspects of the present disclosure.
Fig. 3 depicts an example of different locations in a code snippet that may be used as boundaries corresponding to subtrees of a tree representation of the code snippet.
Fig. 4A, Fig. 4B, Fig. 4C, and Fig. 4D each schematically depicts examples of extracted code snippets based on some of the different locations illustrated in Fig. 3.
Fig. 5 depicts a flowchart illustrating an example method for practicing selected aspects of the present disclosure.
Fig. 6 depicts a flowchart illustrating another example method for practicing selected aspects of the present disclosure.
Fig. 7 depicts a flowchart illustrating another example method for practicing selected aspects of the present disclosure.
Fig. 8 illustrates an example architecture of a computing device.

### Detailed Description

Implementations are described herein for training and/or evaluating output generated by LLMs to mitigate one or more of the aforementioned challenges associated with using LLMs to predict text. More particularly, but not exclusively, techniques are described herein for leveraging the structured nature of code, such as source code or markup language, to: (i) impose distributions on LLMs that reduce the occurrence of the aforementioned errors by increasing the likelihood of sensible and/or logical end tokens; and (ii) trim LLM output to address errors that remain.

Examples described herein primarily relate to LLMs. As used herein, "LLMs" may include, for instance PaLM, BERT, LaMDA, Meena, and/or any other LLM, such as any other LLM that is encoder-only based, decoder-only based, sequence-to-sequence based and that optionally includes an attention mechanism or other memory. Notably, these LLMs typically have hundreds of millions or billions of parameters. However, this is not meant to be limiting.

Techniques described herein may additionally or alternatively be applied to other types of machine learning models that can be used to predict code snippets. These other types of machine learning models may include, but are not limited to, multimodal generative models (*e.g*., Gemini), sequence-to-sequence models such as recurrent neural networks (RNNs), long short-term memory (LSTM) networks, and/or gated recurrent unit (GRU) networks, to name a few.

In various implementations, a tree structure associated with code may be leveraged during training of a machine learning model such as an LLM to condition the LLM to generate LLM output that is likely end at a logical and/or sensible location. In the context of source code, a logical and/or sensible end location may include, for example, a location following a token that explicitly signals the end of a source code statement (*e.g*., a semicolon, an end parenthesis), or another token that is a logical or sensible end to a statement (*e.g*., the end of a command or instruction). In the context of other types of code, including markup language such as HTMI, or XML), a logical and/or sensible end location may follow a token that explicitly signals the end of a document object model (DOM) element, a token that signals the end of an individual element (*e.g.,* ">"), and so forth.

During training, a starting location in an original code snippet may be selected, *e.g.,* at random. For example, a cursor position may be selected at random within an instruction, within a conditional statement, within a function, *etc.* A graph (*e.g.,* tree) representation of the original code snippet also may be obtained and/or generated. For example, with source code in a programming language such as Python, C, C++, *etc.,* an abstract syntax tree (AST), control flow graph (CFG), or similar, may be generated and/or obtained if it already exists. The starting location and tree representation may then be used to generate training data for use in training a machine learning model such as an LLM.

Also during training, a subtree of the tree representation that contains the starting location may be identified. For example, a subtree and/or leaf of a potential subtree that contains characters on one or both sides of the starting location may be identified. In some implementations, additional leaves (or additional subtrees) that are related to the initial leaf may also be identified as part of the same subtree. For instance, assuming a first leaf that represents a token immediately following the starting location, in some implementations, the subtree may further be defined to include another leaf that is a sibling of the first leaf, an ancestor of the first leaf, a sibling of an ancestor of the first leaf, *etc.*

Once the subtree is identified, a ground truth portion of the original code snippet that corresponds to at least a portion of the subtree of the tree representation may be identified, extracted, and/or masked. This portion may include, for instance, code elements in between the starting location and an end location that immediately follows the last code element represented by the subtree. In addition, a remainder of the original code snippet outside of the ground truth portion may also be identified. In some implementations, the remainder may include a prefix portion of the original code snippet, and the ground truth portion may include a suffix of the original code snippet that follows the prefix portion. Alternatively, the remainder may include a suffix portion of the original code snippet, and the ground truth portion itself may include the prefix portion.

In other implementations in which the LLM is being trained for improved code infilling, the ground truth portion may include a middle portion of the original code snippet. The remainder of the original code snippet may include a prefix portion of the original code snippet that precedes the ground truth portion and a suffix portion of the original code snippet that follows the ground truth portion. In some implementations, a training example may be formulated with the prefix and suffix portions of the original code snippet positioned first, followed by the ground truth portion (which was the middle portion of the original code snippet). In some such implementations, one or more demarcation tokens, sometimes referred to as "sentinel" tokens, may be placed between these portions to identify to the LLM which portion is which.

For example, an original code snippet may be broken up into three portions: left-context (prefix), middle (what is being referred to herein as "ground truth" portion, and what the LLM is meant to predict), and right-context (suffix). The resulting training example may rearrange these components, *e.g*., to be formulated as left-context, right-context, and middle. In some implementations, the training example may include a first sentinel token identifying the prefix (*e.g.,* "<PRE>"), an encoding (*e.g.,* embedding) of the prefix portion of the original code snippet, a second sentinel token identifying the suffix (*e.g*., "<SUF>"), an encoding of the suffix portion of the original code snippet, a sentinel token identifying the middle (*e.g.,* "<MID>"), an encoding of the middle portion of the original code snippet, and an end token identifying an end of the training example (*e.g*., "<END>" or "<EOM>" in some cases). For example, the training example may be formulated as follows:
<PRE> o enc(prefix) o <SUF> o enc(suffix) o <MID> o enc(middle)<END>
where "o" represents concatenation, and *enc*(*x*) represents an encoding (*e.g.,* embedding) of *x.*

Once the training example (and likely many others like it) is formulated, it may be used to train the LLM. Because the different portions (particularly the middle) are selected to correspond to subtree boundaries, the LLM may be trained to generate output that is more likely to comport to these boundaries, rather than generating repetitions or incomplete/incomplete-appearing (*e.g*., unintentionally cut off) LLM output as described above. Consequently, during and/or after inference, when the LLM is prompted with an input prompt that comports with the following:
<PRE> o *enc*(prefix) o <SUF> o enc(suffix) o <MID> o ??
the LLM is more likely to predict *enc*(middle) that is complete, without repetitions.

During inference, the LLM can be used to predict code, *e.g.,* in response to a user operating an integrated development environment (IDE) or similar code editor to write a piece of code. For instance, upon writing some length of code, that code may be used as the prefix. Code that follows this prefix code (and the user's cursor, where applicable) may be used as a suffix. Then, the same input prompt (2) may be used to predict, as a recommended code insertion or autocompletion, the middle portion of the code.

Even with the LLM being trained as described, it is still possible for the LLM output to include errors, such as repetitions, incomplete code, *etc.* This may be because, for instance, the LLM output that would ideally be generated is outside of the capabilities of the LLM and/or imposed constraints. For example, the LLM may be incapable of generating sufficient tokens in a current iteration, or at least of generating enough tokens within threshold amount of time (imposed to limit latency, for example).

Accordingly, in various implementations, a *post facto* technique may be performed, *e.g.,* prior to a recommendation being presented to the user, to trim LLM output such that the trimmed LLM output that is presented is sensible and/or logical. For example, a code snippet may be processed using an LLM or other machine learning model to generate probability distribution(s) over a defined population of tokens. As part of normal operation, these probability distributions may be used to formulate LLM output that includes a sequence of tokens selected from the defined population. In the present context, the selected sequence of tokens may be indicative of a predicted code snippet.

However, this LLM output may still include some of the issues described above, e.g., incomplete statements, repetitions, *etc.* Accordingly, in various implementations, the probability distributions generated previously may be examined after the fact to determine alternative probabilities that at least some token positions of the LLM output could have been filled with end tokens instead. Put another way, a different sampling strategy may be employed post facto to identify other token location(s) that perhaps could have been filled with end tokens instead. Based on these alternative probabilities, a given token of the LLM output may be selected as a "final" token, *e.g.,* the last substantive token that will be presented to the user. Then, the LLM output that follows the final token may be trimmed to generate trimmed LLM output. The trimmed LLM output may then be presented to the user. Because it was trimmed to a location that was more likely than other locations to have been filled with an end token, the predicted code sequence represented by the LLM output may be more complete in appearance, *e.g*., by not ending mid-statement. It also may not include repetitions.

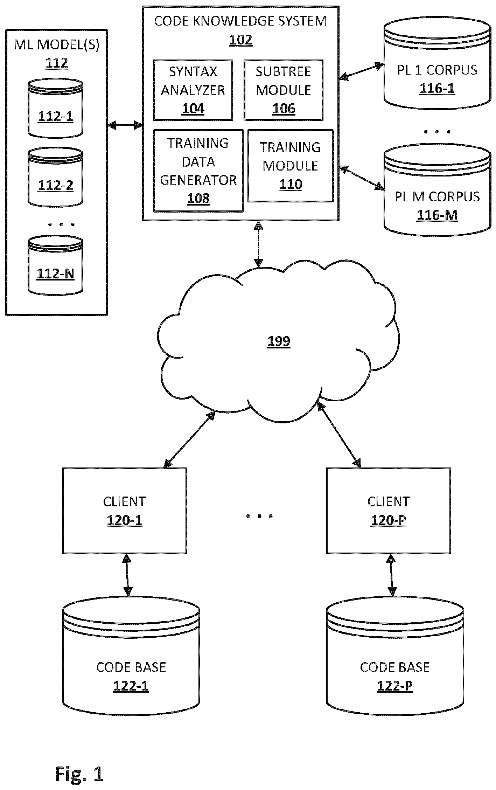

Fig. 1 schematically depicts an example environment in which selected aspects of the present disclosure may be implemented, in accordance with various implementations. Any computing devices depicted in Fig. 1 or elsewhere in the figures may include logic such as one or more microprocessors (*e.g*., central processing units or "CPUs", graphical processing units or "GPUs", tensor processing units or "TPUs") that execute computer-readable instructions stored in memory, or other types of logic such as application-specific integrated circuits ("ASIC"), field-programmable gate arrays ("FPGA"), and so forth. Some of the systems depicted in Fig. 1, such as a code knowledge system 102, may be implemented using one or more server computing devices, which may or may not be connected by one or more computer networks 199, and which may form what is sometimes referred to as a "cloud infrastructure," although this is not required.

A code knowledge system 102 may be provided for helping clients 120-1 to 120-P manage their respective code bases 122-1 to 122-P. Code knowledge system 102 may include, among other things, one or more ML models 112-1, 112-2, ... ,112-N that are usable by, or on behalf of, one or more clients 120-1 to 120-P to manage and/or make changes to one or more corresponding code bases 122-1 to 122-P. Each client 120 may be, for example, an individual, an entity or organization such as a business (*e.g.,* financial institute, bank, *etc.*), non-profit, club, university, government agency, or any other organization that operates one or more software systems. For example, a bank may operate one or more software systems to manage the money under its control, including tracking deposits and withdrawals, tracking loans, tracking investments, and so forth. An airline may operate one or more software systems for booking/canceling/rebooking flight reservations, managing delays or cancellations of flights, managing people associated with flights, such as passengers, air crews, and ground crews, managing airport gates, and so forth.

In various implementations, code knowledge system 102 may include and/or be communicatively coupled with a machine learning ("MI," in Fig. 1) database 112 that includes data indicative of one or more trained machine learning models 112-1, 112-2, ... ,112-N. These trained machine learning models 112-1, 112-2, ... , 112-N may include various types of models, some of which were mentioned previously, including but not limited to LLMs, multimodal models, RNN(s), LSTM networks, GRU networks, and any other type of machine learning model that may be applied to facilitate selected aspects of the present disclosure.

In some implementations, code knowledge system 102 may also have access to one or more programming-language-specific corpuses 116-1 to 116-M. In some implementations, these programming-language-specific corpuses 116-1 to 116-M may be used, for instance, to pretrain, train, and/or fine-tune one or more of the machine learning models 112-1 to 112-N. In some implementations, the programming-language-specific corpuses 116-1 to 116-M may include examples of source code (*e.g.,* entire code bases, libraries, *etc.*), inline comments, textual metadata associated with source code (*e.g*., commits), documentation such as textbooks and programming manuals, programming language-specific discussion threads, presentations, academic papers, and so forth.

In some implementations, a client 110 that wishes to enable manipulation of its code base 112 using machine learning model(s) 112-1 to 112-N may establish a relationship with an entity (not depicted in Fig. 1) that hosts code knowledge system 102. For instance, when a developer writes all or part of a source code snippet (*e.g.,* all of an instruction, part of an instruction *etc*.), code knowledge system 102 may generate one or more candidate autocompletion source code snippets. If the newly-written source code snippet is inserted prior to existing source code, code knowledge system 102 may apply one or more machine learning models 112-1 to 112-N to both the code written by the developer (prefix) and the existing code that follows (suffix) generate one or more recommended autocompletions to "infill" a middle code snippet in between the prefix and suffix.

In various implementations, code knowledge system 102 may be configured to use tree structure that often underlies various types of structured languages, including various types of code such as source code, markup language, *etc.,* to train generative machine learning models 112-1 to 112-N to generate improved code recommendations and/or predictions. Additionally, code knowledge system 102 may be configured to perform post facto analysis and/or manipulation of generative model output, *e.g*., by trimming it, so that the generative model output is less likely to include the issues mentioned previously, such as repetitions, nonsensical or incomplete output, *etc.*

To this end, code knowledge system 102 may include a syntax analyzer 104, a subtree module 106, a training data generator 108, and/or a training module 110. In various implementations, one or more of elements 104-110 may be omitted or combined with other(s) of elements 104-110. Additionally or alternatively, in various implementations, one or more of elements 104-110 may be implemented elsewhere besides code knowledge system 102, such as on one or more clients 120.

Syntax analyzer 104 may be configured to identify and/or select a starting location in an original code snippet and process the original code snippet to generate a structured representation of the original code snippet. In some implementations, the starting location may be a cursor location (*e.g.,* a location between two characters, or a location of a character) within the original code snippet that is selected at random or manually. If the original code snippet is a source code snippet written in a programming language such as Python, C, C++, *etc.,* then the structured representation may be a graph and/or tree representation such as , for instance, an AST, CFG, *etc.* In some such implementations, syntax analyzer 104 may include and/or be implemented as part of a compiler that includes a syntax analysis component or stage. In other implementations the original code snippet may be in the form of a markup language such as JavaScript Object Notation (JSON), hypertext markup language (HTML), extensible markup language (XML), *etc.* In these implementations, syntax analyzer 104 may generate a structured representation such as a document object model (DOM) tree to represent the original code snippet.

Subtree module 106 (which in some implementations may be combined into syntax analyzer 104) may be configured to identify a portion of the structured representation, such as a subtree of the tree representation, which corresponds to the starting location in the original code snippet. In some implementations, the subtree may include a leaf that corresponds to (*e.g.,* represents contains a code element that immediately follows) the starting location. The subtree may further include additional leaves that, with the first leaf, collectively form a subtree of the tree representation. For example, the subtree may further include one or more additional leaves that are siblings of the first leaf, and/or one or more ancestors of the first leaf. Additionally or alternatively, the subtree may include one or more siblings of one or more ancestors of the first leaf. Generally speaking, selecting such a subtree will facilitate selection of logically coherent snippets of code by training data generator 108.

In some implementations, a size and/or membership of the subtree identified by subtree module 106 may be dictated by factors such as a desired distribution of code lengths that the model should be able to predict, various heuristics, latency management, context length, etc. For example, there may be a desire to present a user of an IDE with multiple options for autocompleting code, with one option being twenty code elements long, another option being forty code elements long, another being sixty code elements long, and so on. In some such implementations, to generate training data with the desired distributions, subtree module 106 may identify subtrees that represent underlying code having lengths of twenty, forty, and so on, and downstream components may generate training examples for each length.

Training data generator 108 may be configured to identify a ground truth portion of the original code snippet that corresponds to a portion of the subtree between the starting location and an end of the subtree. In some implementations, training data generator 108 may generate a training example that rearranges the ground truth portion of the original code snippet relative to a remainder of the original code snippet outside of the ground truth portion. This remainder may include, for instance, a prefix portion of the original code snippet that precedes the ground truth portion, and/or a suffix portion of the original code snippet that follows the ground truth portion.

Training module 110 may be configured to train one or more machine learning models 112-1 to 112-N to generate predicted code snippets that correspond to portions of subtrees identified by subtree module 106. In various implementations, this training may include processing the remainder of the original code snippet outside of the ground truth portion using the machine learning model. For example, in some implementations in which the machine learning model takes the form of an LLM, training module 110 may generate an input prompt for the LLM that includes the training example, and process the input prompt using the LLM to generate LLM output. The LLM output may or may not include token(s) that are indicative of a predicted source code snippet that corresponds to a portion of the subtree identified by subtree module 106. In some implementations, training the machine learning model may include comparing the predicted code snippet to the ground truth portion of the original code snippet, and training the machine learning model based on the comparison.

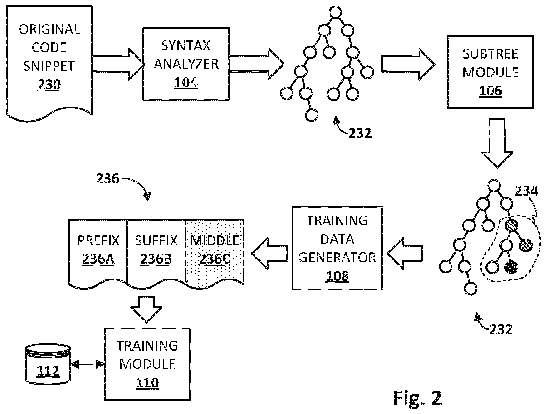

Fig. 2 depicts an example of how various components depicted in Fig. 1 may cooperate to carry out selected aspects of the present disclosure. Starting at top left, an original code snippet 230, which may be a piece of source code written in a programming language, a markup language snippet, *etc.,* may be processed by syntax analyzer 104 to generate a tree representation 232 of original code snippet 230. Depending on the nature of original code snippet 230, tree representation may take various forms, such as an AST, CFG, *etc.*

Tree representation 232 may be processed by subtree module 106 to identify/extract a subtree 234. Subtree 234 may include a leaf (black leaf in Fig. 2) that corresponds to (*e.g.,* represents) a code element that immediately follows the starting location. In various implementations, the starting location may be selected at random or based on user input. Subtree 234 may also include one or more siblings, ancestors, and/or siblings of ancestors that collectively form subtree 234. For example, in Fig. 2, and as indicated by the pattern fills, subtree 234 includes a left sibling of the black leaf, an immediate parent of the black leaf, a grandparent of the black leaf, and a sibling of the black leaf's parent.

Training data generator 108 may process subtree 234 to generate a training example 236. In some implementations, including that depicted in Fig. 2, training example 236 may include a prefix 236A, a suffix 236B, and a middle 236C, in that order (*i.e.* as shown in Fig. 2). Prefix 236A may include a portion of original code snippet 230 that precedes the starting location and/or a beginning location of code that corresponds to subtree 234. Suffix 236B may include a portion of original code snippet 230 that follows a final code element of the portion of original code snippet corresponding to subtree 234. Middle 236C may include a portion of original code snippet 230 that corresponds to subtree 234.

In various implementations, training module 110 may process training example 236 using one or more machine learning models 112. In some such implementations, one or more input tokens may be masked, such that when the machine learning model 112 is applied to the remaining unmasked tokens, prediction(s) are made for the masked tokens. These predictions may then be compared to the original tokens that were masked, and training module 110 may train machine learning model 112 based on the comparison, *e.g*., using techniques such as gradient descent, back propagation, cross entropy, *etc.* In Fig. 2, middle 236C is shaded to indicate that it is the portion that may be masked and predicted during training.

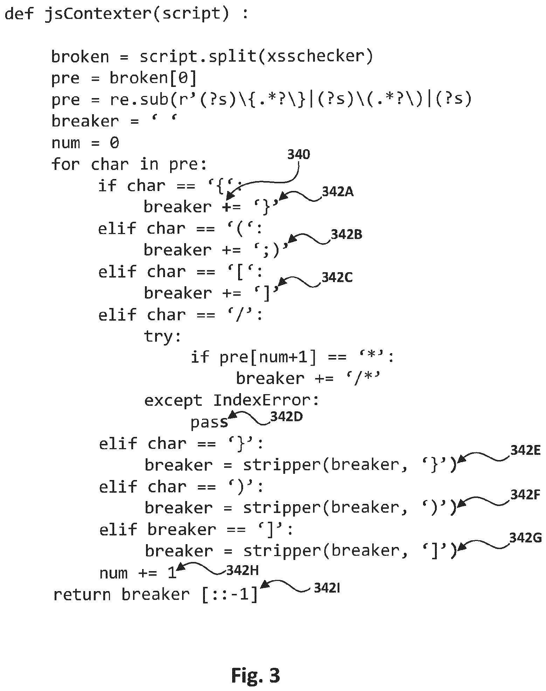

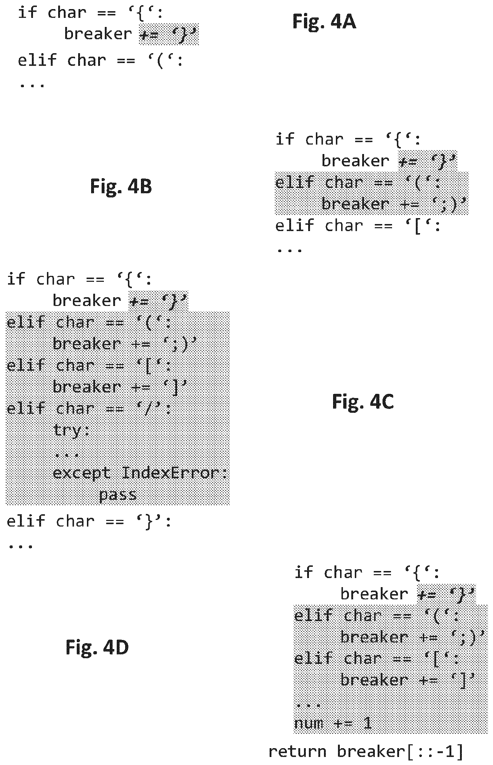

Figs. 3 and 4 depict examples of how a code snippet may be processed using the technique depicted in Fig. 2 to identify candidate middle portions of code that can be used, *e.g.,* by training module 110, to train machine learning model(s) 112-1 to 112-N. Fig. 3 depicts an example of an original code snippet. In various implementations, a starting location 340 may be selected, *e.g.,* at random, manually, *etc.,* within the original code snippet. Here, starting location 340 is just before the "+=" operator.

Once the starting location is selected/identified, one or more candidate end locations may be identified, with each candidate end location corresponding to the last code element represented by a subtree shared with the starting location. In Fig. 3, for instance, a first candidate end location 342A is a single end quote (') that follows an end bracket ("}"). A second candidate end location 342B is a single end quote (') that follows an end parenthesis (")"). A third candidate end location 342C is a single end quote (') that follows an end square bracket ("]").

A fourth candidate end location 342D is the command "pass" that follows the "except IndexError" statement. A fifth candidate end location 342E is an end parenthesis (")") that ends a "stripper" function seeking a bracket ("}"). A sixth candidate end location 342F is an end parenthesis (")") that ends a "stripper" function seeking an end parenthesis (")"). A seventh candidate end location 342G is an end parenthesis that ends a "stripper" function seeking a square bracket ("]") . An eighth candidate end location 342H is the number 1 that follows a "num +--" operation. A ninth candidate end location 3421 is the end square bracket ("]") at the end of the text, ""[::-1]". These candidate end locations are for illustration only and are not meant to be limiting. Any of candidates 342A-I may be selected at random, based on user input, based on various heuristics (*e.g*., a target size of an infill), based on features of the tree representation's structure, based on aspect(s) of the subtree, and so forth.

Figs. 4A-D depict portions of the original source code snippet that would be identified/extracted as corresponding to, respectively, candidate locations 342A, 342B, 342D, and 342H. Additional portions corresponding to candidate locations 342C, 342E-G, and 3421 would operate similarly, and are omitted for brevity.

In Fig. 4A, the portion that would be selected as the middle (*e.g.,* 236C in Fig. 2) is highlighted in grey, and includes the text, " += '}' ". This corresponds to the code in Fig. 3 between starting location 340 and first candidate end location 342A. In Fig. 4B, the portion that would be selected as the middle (*e.g.,* 236C in Fig. 2) is again highlighted in grey, and corresponds to the code in Fig. 3 between starting location 340 and second candidate end location 342B. In Fig. 4C, the portion that would be selected as the middle (*e.g.,* 236C in Fig. 2) is again highlighted in grey, and corresponds to the code in Fig. 3 between starting location 340 and fourth candidate end location 342D. In Fig. 4D, the portion that would be selected as the middle (*e.g.,* 236C in Fig. 2) is again highlighted in grey, and corresponds to the code in Fig. 3 between starting location 340 and eighth candidate end location 342H.

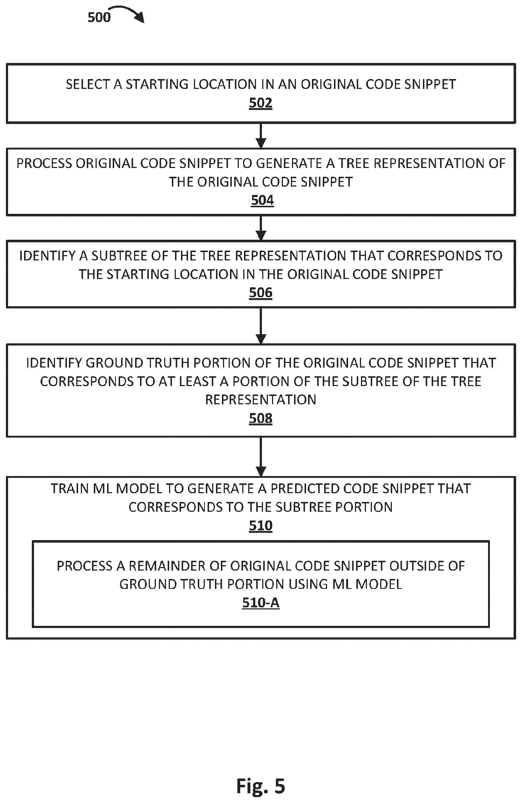

Fig. 5 is a flowchart illustrating an example method 500 of training a machine learning model such as an LLM or other generative model to predict portions of source code based on other source code that precedes (*e.g.,* as prefix) and/or follows (*e.g.,* as a suffix) the predicted source code, in accordance with implementations disclosed herein. For convenience, the operations of the flow chart are described with reference to a system that performs the operations. This system may include various components of various computer systems, such as one or more components of code knowledge system 102. Moreover, while operations of method 500 are shown in a particular order, this is not meant to be limiting. One or more operations may be reordered, omitted or added.

At block 502, the system, *e.g*., by way of syntax analyzer 104, may select a starting location (*e.g.,* 340) in an original code snippet (*e.g.,* 230). As noted elsewhere herein, this selection may be random, controlled by a user, *etc.* At block 504, the system, *e.g.,* by way of syntax analyzer 104, may process the original code snippet to generate a tree representation (*e.g*., 232) of the original code snippet. In other implementations, other types of graphs representing code may be generated.

At block 506, the system, *e.g*., by way of subtree module 106, may identify a subtree (*e.g.,* 234) of the tree representation (*e.g.,* 232) that contains a leaf that corresponds to the starting location (*e.g.,* 340) in the original code snippet (*e.g.,* 230). For example, if the starting location immediately precedes a particular code element (*e.g*., character, term, operand, variable, command, *etc.*), the leaf that corresponds to that particular code element may be identified. In various implementations, other leaves of a larger subtree may also be identified, so that a subtree is defined collectively. For example, one or more siblings of the first leaf, one or more ancestors of the first leaf, and/or one or more ancestors' siblings of the first leaf, may be identified. In some implementations, the subtree may be selected based on parameters such as a desired size of the predicted code output, a desired distribution of the training data, various heuristics, desired number of lines of code, and so forth. For instance, there may be a desire to train the generative model to generate an infill having a length as close as possible to *x* (positive integer) chosen from a distribution. In various implementations, subtree module 106 may select nodes and leaves from the larger tree representation for inclusion in the subtree until the code elements underlying the subtree have a length (*e.g*., number of code elements) that is as close as possible to the desired infill length.

At block 508, the system, *e.g*., by way of training data generator 108, may identify a ground truth portion (*e.g*., 236C, highlighted portions of Figs. 4A-C) of the original code snippet that corresponds to a portion of the subtree (*e.g.,* 234) of the tree representation (*e.g.,* 232) that represents code elements between the start location and an end location immediately following the last code element represented by the subtree. For example, the subtree may be traversed in an order of operation of the corresponding code elements. As it is traversed, each code element may be added to a combined string of code elements that when complete, forms the ground truth portion (*e.g*., the middle to be infilled).

At block 510, the system, *e.g*., by way of training module 110, may train a machine learning model (*e.g.,* 112) to generate a predicted code snippet that corresponds to a portion of the subtree. For example, in some implementations, at block 510-A, training module 110 may process a remainder of the original code snippet outside of the ground truth portion, *e.g*., 236A and 236B in Fig. 2, using the machine learning model (*e.g.,* 112). In some cases this may generate a prediction of all or part of the ground truth middle portion. This prediction of the ground truth middle portion may then be compared by training module 110 to the actual ground truth portion that corresponds to the subtree. To the extent they differ, this represents an error that is used by training module 110 to train the machine learning model.

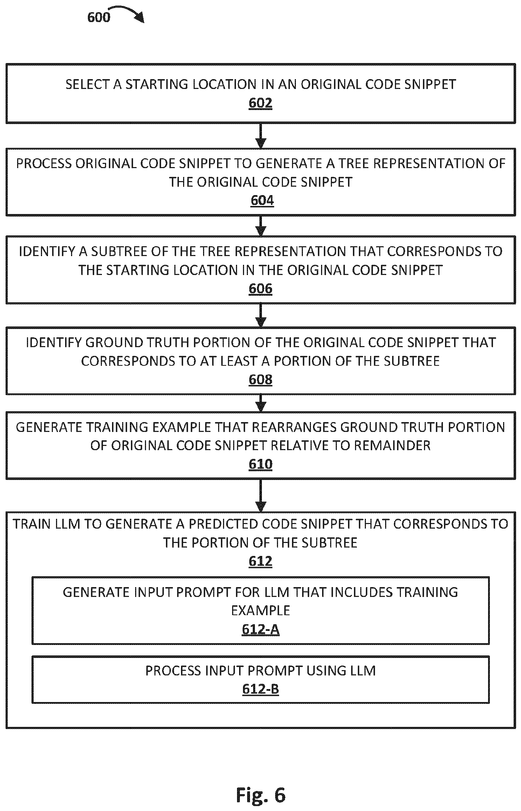

Fig. 6 is a flowchart illustrating another example method 600 of training a machine learning model such as an LLM or other generative model to predict portions of source code based on other source code that precedes (*e.g.,* as prefix) and/or follows (*e.g.,* as a suffix) the predicted source code, in accordance with implementations disclosed herein. Method 600 may be used specifically when training LLMs or other generative models. For convenience, the operations of the flow chart are described with reference to a system that performs the operations. This system may include various components of various computer systems, such as one or more components of code knowledge system 102. Moreover, while operations of method 600 are shown in a particular order, this is not meant to be limiting. One or more operations may be reordered, omitted or added.

Blocks 602-608 are similar to blocks 502-508 and will not be described again. At block 610, the system, *e.g*., by way of training data generator 108, may generate a training example (*e.g.,* 236) that rearranges the ground truth portion (*e.g.,* 236C) identified at block 608 relative to a remainder of the original source code snippet. In Fig. 2, for example, middle 236C was removed from between prefix 236A and suffix 236B and appended to the end of a concatenation of prefix 236A and suffix 236B.

At block 612, the system may train an LLM (or other generative model) to generate a predicted source code snippet that corresponds to the subtree that was identified at block 606. For instance, at block 612, the system, e.g., by way of training module 110, may generate an LLM input prompt that includes the training example generated at block 610. In some implementations, the LLM prompt may include other information as well, such as a command to predict a portion of the original source code snippet, or other parameters (*e.g*., output context length). At block 612-B, the system, *e.g*., by way of training module 110, may process the input prompt using the LLM. When the output token(s) fail to match corresponding input token(s), training module 110 may train the LLM accordingly.

During normal operation, output generated using a generative model such as an LLM may end with a specific end token (*e.g.,* "<EOM>"). This end token itself may not be part of the substantive output, but instead may be predicted and used as a delimiter that signals the end of the substantive output. In some cases, during prediction of each output token, the model is used to generate a probability distribution over all possible tokens. In most (but not necessarily all) cases, a given output token may correspond to that which had the highest probability of the probability distribution. In addition to "substantive" tokens (*e.g*., words, characters, code elements, *etc.*), these possible tokens may include the end token itself. Consequently, if the end token has the highest probability of the probability distribution, it may be output as the next and final token, and the processing using the generative model may then cease (or move on to the next input prompt).

However, even when a machine learning model such as an LLM is trained as described above to generate probability distributions that result in predicted code that is more likely to coincide with subtree boundaries, the output may still include errors. For example, an output context length of an LLM may not be long enough for an entire code snippet that the LLM would otherwise predict, resulting in LLM output that is indicative of unintentionally incomplete code (*e.g.,* the end token is not predicted with sufficient probability before the context length runs out). Repetitive code may also be predicted as part of the LLM output. For instance, when the machine learning model fails to predict an end token with sufficient confidence before the context length runs out, sometimes the output can end up including the same repeated text. Accordingly, various techniques may be implemented *post facto* (*e.g.,* during or after inference) to correct these issues. In particular, but not exclusively, techniques are described herein for *post facto* evaluation of LLM output to determine where it should end.

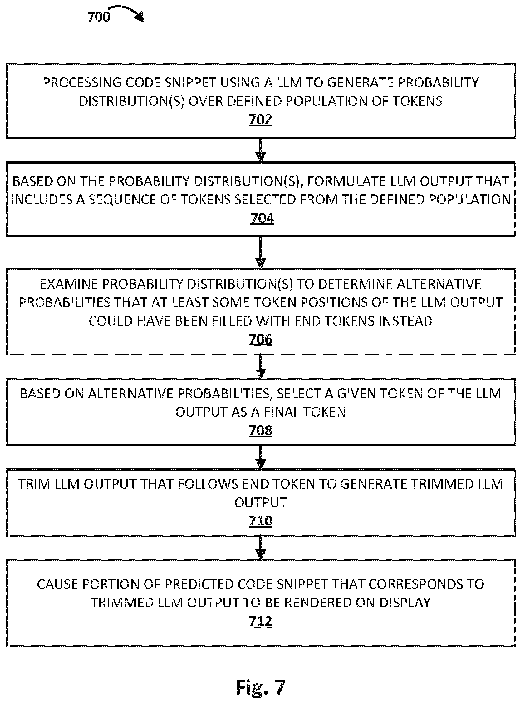

Fig. 7 is a flowchart illustrating an example method 700 of trimming output tokens generated by a generative machine learning model such as an LLM to mitigate against issues such as repetition, incomplete code, and/or nonsensical/illogical outputs, in accordance with implementations disclosed herein. For convenience, the operations of the flow chart are described with reference to a system that performs the operations. This system may include various components of various computer systems, such as one or more components of code knowledge system 102. Moreover, while operations of method 700 are shown in a particular order, this is not meant to be limiting. One or more operations may be reordered, omitted or added.

At block 702, the system may process a code snippet using an LLM or other generative model to generate one or more probability distributions over a defined population of tokens. A predefined population of tokens may include, for instance, characters, numbers, words, symbols, operators, *etc.* At block 704, based on the one or more probability distributions, the system may formulate LLM output that includes a sequence of tokens selected from the defined population. In the present context, the selected sequence of tokens may be indicative of a predicted code snippet. As noted previously, at each predicted token location, the token may be (but is not required to be) selected that has the highest probability of the distribution.

At block 706, the system may (*e.g*., prior to presenting the LLM output to a user) examine the one or more probability distributions generated based on the processing to determine alternative probabilities that at least some token positions of the LLM output could have been filled with end tokens instead. As noted above, at each token position, the probability distribution may include a respective probability that each candidate token should be output next. These candidate tokens may include an end token (*e.g.,* "<EOM>") that signals a logical end of the LLM output.

Based on the alternative probabilities determined at block 706, at block 708, the system may select a given token of the LLM output as a final token. As used herein, a "final" token refers to the last "substantive" token that might be visibly presented to the user as part of, for instance, a code autocompletion recommendation (the end token, by contrast, is merely used to signal the end of the LLM output and may not necessarily be presented to the user). In various implementations, at block 710, the system may trim the LLM output that follows the final token to generate trimmed LLM output. In some cases, an "official" end token may be inserted immediately following this final token, but this is not necessarily required.

At block 712, the system may cause a portion of the predicted code snippet that corresponds to the trimmed LLM output to be rendered on a display. For instance, in some implementations, the original code snippet may be received as input from a user in an integrated development environment (IDE) application (*e.g*., editor). The portion of the predicted code snippet that is rendered on the display may be rendered in the IDE application as a proposed autocompletion.

The operations of method 700 may alternatively be stated as follows. The probability of the end token at every step *i* may be determined, as *p_endᵢ.* Let *j* be the index of the LLM output where the probability of the end token is highest, *i.e. j = argmaxi*(*p_end,).* If no end token is present in the original LLM output, the original LLM output may be trimmed to the first*j*-1 tokens. If the end token is present in the LLM output, the LLM output may be trimmed only if the highest probability end token appears earlier than the actual end token. For instance, if the end token in the LLM output appears at step *k*, the LLM output may be trimmed to the first*j*-1 tokens if *j<k.*

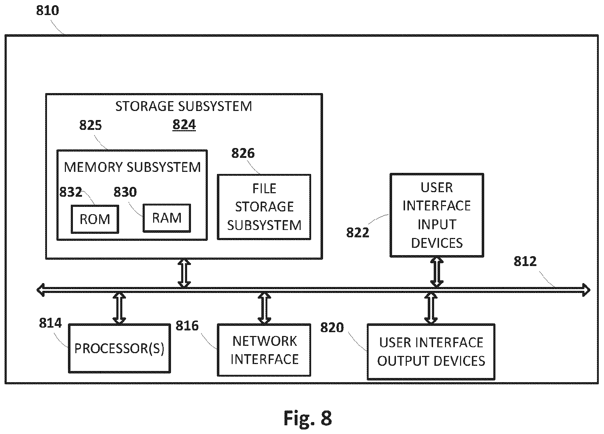

Fig. 8 is a block diagram of an example computing device 810 that may optionally be utilized to perform one or more aspects of techniques described herein. Computing device 810 typically includes at least one processor 814 which communicates with a number of peripheral devices via bus subsystem 812. These peripheral devices may include a storage subsystem 824, including, for example, a memory subsystem 825 and a file storage subsystem 826, user interface output devices 820, user interface input devices 822, and a network interface subsystem 816. The input and output devices allow user interaction with computing device 810. Network interface subsystem 816 provides an interface to outside networks and is coupled to corresponding interface devices in other computing devices.

User interface input devices 822 may include a keyboard, pointing devices such as a mouse, trackball, touchpad, or graphics tablet, a scanner, a touch screen incorporated into the display, audio input devices such as voice recognition systems, microphones, and/or other types of input devices. In general, use of the term "input device" is intended to include all possible types of devices and ways to input information into computing device 810 or onto a communication network.

User interface output devices 820 may include a display subsystem, a printer, a fax machine, or non-visual displays such as audio output devices. The display subsystem may include a cathode ray tube (CRT), a flat-panel device such as a liquid crystal display (LCD), a projection device, or some other mechanism for creating a visible image. The display subsystem may also provide non-visual display such as via audio output devices. In general, use of the term "output device" is intended to include all possible types of devices and ways to output information from computing device 810 to the user or to another machine or computing device.

Storage subsystem 824 stores programming and data constructs that provide the functionality of some or all of the modules described herein. For example, the storage subsystem 824 may include the logic to perform selected aspects of the methods of Fig. 5-7, as well as to implement various components depicted in Figs. 1 and 2.

These software modules are generally executed by processor 814 alone or in combination with other processors. Memory 825 used in the storage subsystem 824 can include a number of memories including a main random-access memory (RAM) 830 for storage of instructions and data during program execution and a read only memory (ROM) 832 in which fixed instructions are stored. A file storage subsystem 826 can provide persistent storage for program and data files, and may include a hard disk drive, a floppy disk drive along with associated removable media, a CD-ROM drive, an optical drive, or removable media cartridges. The modules implementing the functionality of certain implementations may be stored by file storage subsystem 826 in the storage subsystem 824, or in other machines accessible by the processor(s) 814.

Bus subsystem 812 provides a mechanism for letting the various components and subsystems of computing device 810 communicate with each other as intended. Although bus subsystem 812 is shown schematically as a single bus, alternative implementations of the bus subsystem may use multiple buses.

Computing device 810 can be of varying types including a workstation, server, computing cluster, blade server, server farm, or any other data processing system or computing device. Due to the ever-changing nature of computers and networks, the description of computing device 810 depicted in Fig. 8 is intended only as a specific example for purposes of illustrating some implementations. Many other configurations of computing device 810 are possible having more or fewer components than the computing device depicted in Fig. 8.

This specification includes the subject matter of the following clauses:
1. A method implemented using one or more processors and comprising:
   selecting a starting location in an original code snippet;
   processing the original code snippet to generate a tree representation of the original code snippet;
   identifying a subtree of the tree representation that contains the starting location in the original code snippet;
   identifying a ground truth portion of the original code snippet that corresponds to at least a portion of the subtree of the tree representation; and
   training a machine learning model to generate a predicted code snippet that corresponds to the portion of the subtree, wherein the training includes processing a remainder of the original code snippet outside of the ground truth portion using the machine learning model.
2. The method of clause 1, further comprising generating a training example that rearranges the ground truth portion of the original code snippet relative to the remainder of the original code snippet outside of the ground truth portion.
3. The method of clause 2, wherein the machine learning model comprises a large language model (LLM).
4. The method of clause 3, wherein training the machine learning model comprises:
   generating an input prompt for the LLM that includes the training example; and
   processing the input prompt using the LLM.
5. The method of clause 1, wherein the remainder of the original code snippet comprises a prefix portion of the original code snippet that precedes the ground truth portion.
6. The method of clause 1, wherein the remainder of the original code snippet comprises a suffix portion of the original code snippet that follows the ground truth portion.
7. The method of clause 6, wherein the remainder of the original code snippet further comprises a prefix portion of the original code snippet that precedes the ground truth portion.
8. The method of clause 1, wherein training the machine learning model comprises:
   comparing the predicted code snippet to the ground truth portion of the original code snippet; and
   training the machine learning model based on the comparing.
9. The method of clause 1, wherein the tree representation comprises an abstract syntax tree (AST).
10. The method of clause 1, wherein the subtree comprises a first leaf that contains the starting location.
11. The method of clause 10, wherein the subtree further comprises a second leaf that is a sibling of the first leaf.
12. The method of clause 10, wherein the subtree further comprises a second leaf that is an ancestor of the first leaf.
13. The method of clause 10, wherein the subtree further comprises a second leaf that is a sibling of an ancestor of the first leaf.
14. The method of clause 1, wherein the original code snippet comprises a source code snippet.
15. The method of clause 1, wherein the original code snippet comprises a markup language snippet.
16. A method implemented using one or more processors and comprising:
   processing a code snippet using a large language model (LLM) to generate one or more probability distributions over a defined population of tokens;
   based on the one or more probability distributions, formulating LLM output that includes a sequence of tokens selected from the defined population, wherein the selected sequence of tokens is indicative of a predicted code snippet;
   determining, based on the one or more probability distributions, alternative probabilities that at least some token positions of the LLM output could have been filled with end tokens instead, wherein an end token signals a logical end of the LLM output;
   based on the alternative probabilities, selecting a given token of the LLM output as a final token;
   trimming the LLM output that follows the final token to generate trimmed LLM output; and
   causing a portion of the predicted code snippet that corresponds to the trimmed LLM output to be rendered on a display.
17. The method of clause 16, wherein the code snippet is received as input in an integrated development environment (IDE), and the portion of the predicted code snippet is rendered in the IDE as a proposed autocompletion.
18. The method of clause 16, further comprising generating an end token to immediately follow the final token.
19. A system comprising one or more processors and memory storing instructions that, in response to execution by the one or more processors, cause the one or more processors to:
   select a starting location in an original code snippet;
   process the original code snippet to generate a tree representation of the original code snippet;
   identify a subtree of the tree representation that corresponds to the starting location in the original code snippet;
   identify a ground truth portion of the original code snippet that corresponds to at least a portion of the subtree of the tree representation; and
   train a machine learning model to generate a predicted code snippet that corresponds to the portion of the subtree, wherein the training includes processing a remainder of the original code snippet outside of the ground truth portion using the machine learning model.
20. The system of clause 19, further comprising instructions to generate a training example that rearranges the ground truth portion of the original code snippet relative to the remainder of the original code snippet outside of the ground truth portion.

While several implementations have been described and illustrated herein, a variety of other means and/or structures for performing the function and/or obtaining the results and/or one or more of the advantages described herein may be utilized, and each of such variations and/or modifications is deemed to be within the scope of the implementations described herein. More generally, all parameters, dimensions, materials, and configurations described herein are meant to be exemplary and that the actual parameters, dimensions, materials, and/or configurations will depend upon the specific application or applications for which the teachings is/are used. Those skilled in the art will recognize, or be able to ascertain using no more than routine experimentation, many equivalents to the specific implementations described herein. It is, therefore, to be understood that the foregoing implementations are presented by way of example only and that, within the scope of the appended claims and equivalents thereto, implementations may be practiced otherwise than as specifically described and claimed. Implementations of the present disclosure are directed to each individual feature, system, article, material, kit, and/or method described herein. In addition, any combination of two or more such features, systems, articles, materials, kits, and/or methods, if such features, systems, articles, materials, kits, and/or methods are not mutually inconsistent, is included within the scope of the present disclosure.

## Claims

1. A method implemented using one or more processors and comprising:
selecting a starting location in an original code snippet;
processing the original code snippet to generate a tree representation of the original code snippet;
identifying a subtree of the tree representation that contains the starting location in the original code snippet;
identifying a ground truth portion of the original code snippet that corresponds to at least a portion of the subtree of the tree representation; and
training a machine learning model to generate a predicted code snippet that corresponds to the portion of the subtree, wherein the training includes processing a remainder of the original code snippet outside of the ground truth portion using the machine learning model.

2. The method of claim 1, further comprising generating a training example that rearranges the ground truth portion of the original code snippet relative to the remainder of the original code snippet outside of the ground truth portion.

3. The method of claim 2, wherein the machine learning model comprises a large language model (LLM).

4. The method of claim 3, wherein training the machine learning model comprises:
generating an input prompt for the LLM that includes the training example; and
processing the input prompt using the LLM.

5. The method of claim 1, wherein the remainder of the original code snippet comprises a prefix portion of the original code snippet that precedes the ground truth portion.

6. The method of claim 1, wherein the remainder of the original code snippet comprises a suffix portion of the original code snippet that follows the ground truth portion, optionally wherein the remainder of the original code snippet further comprises a prefix portion of the original code snippet that precedes the ground truth portion.

7. The method of claim 1, wherein training the machine learning model comprises:
comparing the predicted code snippet to the ground truth portion of the original code snippet; and
training the machine learning model based on the comparing.

8. The method of claim 1, wherein the tree representation comprises an abstract syntax tree (AST).

9. The method of claim 1, wherein the subtree comprises a first leaf that contains the starting location.

10. The method of claim 9, wherein the subtree further comprises:
a second leaf that is a sibling of the first leaf,
a second leaf that is an ancestor of the first leaf, or
a second leaf that is a sibling of an ancestor of the first leaf.

11. The method of claim 1, wherein the original code snippet comprises a source code snippet or a markup language snippet.

12. A method implemented using one or more processors and comprising:
processing a code snippet using a large language model (LLM) to generate one or more probability distributions over a defined population of tokens;
based on the one or more probability distributions, formulating LLM output that includes a sequence of tokens selected from the defined population, wherein the selected sequence of tokens is indicative of a predicted code snippet;
determining, based on the one or more probability distributions, alternative probabilities that at least some token positions of the LLM output could have been filled with end tokens instead, wherein an end token signals a logical end of the LLM output;
based on the alternative probabilities, selecting a given token of the LLM output as a final token;
trimming the LLM output that follows the final token to generate trimmed LLM output; and
causing a portion of the predicted code snippet that corresponds to the trimmed LLM output to be rendered on a display.

13. The method of claim 12 wherein the code snippet is received as input in an integrated development environment (IDE), and the portion of the predicted code snippet is rendered in the IDE as a proposed autocompletion.

14. The method of claim 12, further comprising generating an end token to immediately follow the final token.

15. A system comprising one or more processors and memory storing instructions that, in response to execution by the one or more processors, cause the method of any one of claims 1 to 14 to be performed.
